# EUROPEAN PATENT APPLICATION

(11) **EP 4 844 672 A1**
(43) Date of publication of application: **25.11.2026**
(21) Application number: 25751031.3
(22) Date of filing: 07.01.2025
(51) Int. Cl.: G06T 5/77, G06T 5/40, H04N 5/265

(54) **DATA PROCESSING METHOD AND APPARATUS THEREFOR**

(30) Priority: 05.02.2024 CN 202410171549
(71) Applicant: Huawei Technologies Co., Ltd., Shenzhen, Guangdong 518129 (CN)
(72) Inventor: LI, Wenbo, Shenzhen, Guangdong 518129 (CN); PEI, Renjing, Shenzhen, Guangdong 518129 (CN); ZOU, Xueyi, Shenzhen, Guangdong 518129 (CN); XU, Songcen, Shenzhen, Guangdong 518129 (CN); YAN, Youliang, Shenzhen, Guangdong 518129 (CN)
(74) Representative: Maiwald GmbH
(86) International application number: PCT/CN2025/070905
(87) International publication number: WO 2025/167429

(57) **Abstract**

A data processing method is applied to the field of artificial intelligence, and includes: obtaining a first image; generating target information based on the first image, where the target information indicates a texture feature or a semantic feature of the first image; and obtaining a second image based on the first image and the target information by using a first generative model, where the second image has the texture feature or the semantic feature. In this application, the target information that is related to the texture feature or the semantic feature and that is of the first image is determined, and the target information is input into a generative model as a prior. This can help the generative model understand content and texture of an input image, and therefore texture and semantic details in a generated image can be better restored. In this way, a generated image of higher quality is obtained, and generalization of the model in different scenarios can also be improved.

## Description

This application claims priority to Chinese Patent Application No. 202410171549.0, filed with the China National Intellectual Property Administration on February 5, 2024 and entitled "DATA PROCESSING METHOD AND APPARATUS THEREOF", which is incorporated herein by reference in its entirety.

### TECHNICAL FIELD

This application relates to the field of artificial intelligence, and in particular, to a data processing method and an apparatus thereof.

### BACKGROUND

Artificial intelligence (Artificial Intelligence, AI) is a theory, a method, a technology, and an application system in which human intelligence is simulated, extended, and expanded by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a manner similar to human intelligence. Artificial intelligence is to research design principles and implementation methods of various intelligent machines, so that the machines have perception, inference, and decision-making functions.

A purpose of an image enhancement technology is to convert a low-quality image into a high-quality image. For example, an image super-resolution technology is used to convert a low-resolution image into a highresolution image, which improves image definition and detail authenticity.

An existing image super-resolution technology is usually to fit a mapping between a low-definition image and a high-definition image. To better restore details, an existing method uses a pre-trained generative model.

However, content of an input image is usually not understood in the existing method. As a result, quality of a generated image is low.

### SUMMARY

According to a first aspect, this application provides a data processing method. The method includes: obtaining a first image; generating target information based on the first image, where the target information includes a first text and/or a second image, the first text indicates an optimization direction for image quality of the first image, image quality of the second image is higher than the image quality of the first image, and semantics of the second image corresponds to semantics of the first image; and obtaining a third image based on the first image and the target information by using a first generative model, where image quality of the third image is higher than the image quality of the first image, and content of the third image is consistent with content of the first image.

Image quality means subjective evaluation of people's visual perception of an image. It is usually considered that image quality means a degree of an error generated in a human visual system between a tested image (that is, a target image) relative to a standard image (that is, an original image). Another definition is that when there is no standard image, if human eyes can clearly distinguish an object in the tested image, and can better distinguish a foreground, a background, a contour and texture, and the like of the object in the image, image quality is good.

An "optimization direction of quality" may be understood as improvement of people's visual perception on an image, and a foreground, a background, a contour, texture, and the like of an object in the image are clearer and can be better distinguished.

A pixel of the first image (a low-definition image) and that of the second image (a reference image) do not match, and the pixel of the first image and that of the second image at corresponding positions differ greatly. The pixel of the first image (the low-definition image) and that of the third image match, and the pixel of the first image and that of the second image at corresponding positions differ slightly. Visually, it may be considered that a same picture indicates that definition of the images is different.

High or low quality may be evaluated by using a high or low satisfaction degree of people's visual perception, or may be evaluated by using some non-reference metrics, such as NIQE (Natural Image Quality Evaluator), MANIQA (Multi-dimension Attention Network for No-Reference Image Quality), and multi-scale image quality (multi-scale image quality, MUSIQ).

The pixel of the first image and that of the third image (a high-definition image) basically match, and quality improvement may be represented as an improved definition degree, richer details, and the like at a same position. The preceding non-reference metrics are also improved accordingly.

The target information may indicate an improvement direction of quality of a generation result of the first generative model, and is input into the generative model as prior information, which can help better optimize the generative model, and improve quality of a generated image.

In a possible implementation, generating the target information based on the first image includes: generating the target information based on the first image by using a machine learning model. That is, the target information is obtained based on the first information.

The first generative model is configured to execute a target task. The target information further indicates a feature that needs to be possessed by a high-quality result obtained after the first generative model executes the target task on the first image, and the feature that needs to be possessed is not possessed by the first image.

The improvement direction of quality may be: What kind of generated image obtained based on the first image by using the first generative model is a generated image of higher quality. The improvement direction of quality may describe an improvement direction of image quality at a fine-grained level. Optionally, the information may be input into the generative model in a text manner.

In a possible implementation, the target information further indicates a texture feature or a semantic feature of the first image. In a conventional technology, when an image is enhanced, for example, when super-resolution processing is performed, noise of the image and the image are input into a generative network, to obtain a super-resolution processed image. However, the generative network usually does not understand content of the input image, and cannot use common sense to accurately restore semantics and texture of an object in the image. In particular, effect of an image generated in a real scenario is poorer. In this application, the target information that is related to the texture feature or the semantic feature and that is of the first image is determined, and the target information is input into the generative model as a prior. This can help the generative model understand content and texture of the input image, and therefore texture and semantic details in a generated image can be better restored. In this way, a generated image of higher quality is obtained, and generalization of the model in different scenarios can also be improved.

Texture is a visual feature that reflects a homogeneity phenomenon of an image, and the texture reflects organization and arrangement attributes of a surface structure that is of a surface of an object and that changes slowly or periodically. The texture is represented by grayscale distribution of pixels and their surrounding spatial neighborhoods, that is, local texture information. In addition, the local texture information is different from image features such as grayscale and color to different degrees, and repeatability of the local texture information represents global texture information. A texture feature reflects a property of a global feature, and also describes a surface property of the image or a scene that corresponds to an image region. However, because the texture is only a feature of the surface of the object, and cannot completely reflect an essential attribute of the object, high-level image content cannot be obtained by only using the texture feature. Different from the color feature, the texture feature is not a pixelbased feature, but needs to be statistically calculated in a region including a plurality of pixels.

A semantic feature of an image is a meaning of image content, is not limited to a description using a natural language word, and may include a way in which a human visual system understands the image. For example, for an image of a puppy, semantics of the image may be interpreted as including a natural language word "puppy" and attributes such as a breed and a gender of the puppy. Alternatively, a symbol may be used to represent the concept, and the symbol points to a puppy having a same feature as the puppy in the image. In addition, people can get an abstract impression from the image. The impression helps people associate another similar puppy image with the known image when people see the another similar puppy image.

In a possible implementation, the first generative model is configured to execute the target task, and the target task is one of the following: image enhancement, image noise adding, image style transformation, and image editing.

In a possible implementation, generating the target information based on the first image includes: recognizing and obtaining, based on the first image, the target information of the first image; or receiving the target information that of in the first image and that is input by a user. In other words, a structure and texture of an object can be better restored based on prompt information provided by the user, which improves image fidelity and quality.

In a possible implementation, the target information may include an encoding of the texture feature of the first image.

For example, the first image may be processed by using an encoder (for example, an image encoder) to obtain the encoding of the texture feature of the first image.

In a possible implementation, the target information may include an encoding of the semantic feature of the first image.

For example, the first image may be processed by using an encoder (for example, a text encoder) to obtain the encoding of the texture feature of the first image.

In a possible implementation, the target information may include an encoding that is of the first image and that combines the texture feature and the semantic feature.

For example, the first image may be processed by using encoders (for example, a text encoder and an image encoder), to separately obtain an encoding of the texture feature and an encoding of the semantic feature of the first image. Then, the encoding of the texture feature and the encoding of the semantic feature of the first image are combined by using a modality adaptation module, to obtain the encoding combining the texture feature and the semantic feature.

In a possible implementation, the target information may include a natural language description of the texture feature of the first image.

For example, the first image may be processed by using a machine learning model. The machine learning model may be trained to have a capability of obtaining, based on an image, a natural language description of a texture feature of the image.

In a possible implementation, the target information may include a natural language description of the semantic feature of the first image.

For example, the first image may be processed by using a machine learning model. The machine learning model may be trained to have a capability of obtaining, based on an image, a natural language description of a semantic feature of the image.

In a possible implementation, the target information may include a natural language description that is of the first image and that combines the texture feature and the semantic feature.

For example, the first image may be processed by using the machine learning model. The machine learning model may be trained to have a capability of obtaining, based on the image, the natural language descriptions of the texture feature and the semantic feature of the image.

In addition, in addition to the encoding or the natural language description described above, the semantic feature may alternatively be a semantic segmentation map, a semantic label of an image, a main region of an image, a classification label of an image, or the like. This is not limited in embodiments of this application.

In a possible implementation, the target information includes an image that has the texture feature or the semantic feature of the first image and that is different from the first image.

In the foregoing manner, another image (which may also be referred to as a reference image in this application) having the texture feature or the semantic feature of the first image is used as prior information of the generative model, and is input into the generative model in an image manner, to explicitly guide generation of texture details. This can help the generative model understand content and texture of the input image, and therefore texture and semantic details in a generated image can be better restored. In this way, a generated image of higher quality is obtained, and generalization of the model in different scenarios can also be improved.

In a possible implementation, generating the target information based on the first image includes: obtaining, based on the encoding or the natural language description of the texture feature of the first image, or the encoding or the natural language description of the semantic feature of the first image by using a second generative model, an image having the texture feature or the semantic feature of the first image; or
selecting, from a plurality of images based on the encoding or the natural language description of the texture feature of the first image, or the encoding or the natural language description of the semantic feature of the first image, an image having the texture feature or the semantic feature of the first image.

In addition, the target information may further indicate an improvement direction of quality of a generation result of the first generative model, and is input into the generative model as the prior information, which can help better optimize the generative model, and improve quality of a generated image.

In a possible implementation, the first generative model is configured to execute the target task. The target information further indicates a feature that needs to be possessed by a high-quality result obtained after the first generative model executes the target task on the first image, and the feature that needs to be possessed is not possessed by the first image.

The improvement direction of quality may be: What kind of generated image obtained based on the first image by using the first generative model is a generated image of higher quality. The improvement direction of quality may describe an improvement direction of image quality at a fine-grained level. Optionally, the information may be input into the generative model in a text manner.

In a possible implementation, the first generative model is a diffusion model, and obtaining the second image based on the first image and the target information by using the first generative model includes: obtaining, by using the diffusion model, the second image by using the target information and the first image as a condition input of a noise-adding module of the diffusion model.

According to a second aspect, this application provides a data processing apparatus. The apparatus includes:
an obtaining module, configured to obtain a first image; and
a processing module, configured to: generate target information based on the first image, where the target information includes a first text and/or a second image, the first text indicates an optimization direction for image quality of the first image, image quality of the second image is higher than the image quality of the first image, and semantics of the second image corresponds to semantics of the first image; and obtain a third image based on the first image and the target information by using a first generative model, where image quality of the third image is higher than the image quality of the first image, and content of the third image is consistent with content of the first image.

In a possible implementation, the first generative model is configured to execute an image enhancement task.

In a possible implementation, the processing module is specifically configured to:
obtain the target information based on the first image by using a machine learning model.

In a possible implementation, the image quality is at least one of the following definition: NIQE, MANIQA, and MUSIQ.

In a possible implementation, the target information further indicates a texture feature or a semantic feature of the first image.

In a possible implementation, the target information includes at least one of the following:
an encoding of the texture feature of the first image, an encoding of the semantic feature, an encoding combining the texture feature and the semantic feature, a natural language description of the texture feature of the first image, a natural language description of the semantic feature, or a natural language description combining the texture feature and the semantic feature.

In a possible implementation, the processing module is specifically configured to:
obtain the encoding of the texture feature of the first image based on the first image by using an image encoder;
obtain the encoding of the semantic feature of the first image based on a text description of the first image by using a text encoder; or
obtain, based on the encoding of the texture feature and the encoding of the semantic feature by using a modality adaptation module, the encoding combining the texture feature and the semantic feature.

In a possible implementation, the target information includes an image that has the texture feature or the semantic feature of the first image and that is different from the first image.

In a possible implementation, the processing module is specifically configured to:
obtain, based on the encoding or the natural language description of the texture feature of the first image, or the encoding or the natural language description of the semantic feature of the first image by using a second generative model, an image having the texture feature or the semantic feature of the first image; or
select, from a plurality of images based on the encoding or the natural language description of the texture feature of the first image, or the encoding or the natural language description of the semantic feature of the first image, an image having the texture feature or the semantic feature of the first image.

In a possible implementation, the first generative model is configured to execute the target task. The target information further indicates a feature that needs to be possessed by a high-quality result obtained after the first generative model executes the target task on the first image, and the feature that needs to be possessed is not possessed by the first image.

In a possible implementation, the first generative model is a diffusion model, and the processing module is specifically configured to:
obtain, by using the diffusion model, the second image by using the target information and the first image as a condition input of a noise-adding module of the diffusion model.

According to a third aspect, an embodiment of this application provides a data processing apparatus. The apparatus may include a memory, a processor, and a bus system. The memory is configured to store a program. The processor is configured to execute the program in the memory, to perform the method according to the first aspect and any optional implementation of the first aspect.

According to a fourth aspect, an embodiment of this application provides a computer-readable storage medium. The computer-readable storage medium stores a computer program, and when the computer program is run on a computer, the computer is enabled to perform the method according to the first aspect and any optional implementation of the first aspect.

According to a fifth aspect, an embodiment of this application provides a computer program. When the computer program runs on a computer, the computer is enabled to perform the method according to the first aspect and any optional implementation of the first aspect.

According to a sixth aspect, this application provides a chip system. The chip system includes a processor configured to support a data processing apparatus in implementing functions in the foregoing aspects, for example, sending or processing data or information in the foregoing method. In a possible design, the chip system further includes a memory. The memory is configured to store program instructions and data that are necessary for the execution device or the training device. The chip system may include a chip, or may include a chip and another discrete component.

### BRIEF DESCRIPTION OF DRAWINGS

FIG. 1A is a diagram of a structure of an artificial intelligence main framework;
FIG. 1B and FIG. 1C are diagrams of application system frameworks according to the present invention;
FIG. 1D is a diagram of an optional hardware structure of a terminal;
FIG. 2 is a diagram of a structure of a server;
FIG. 3 is a diagram of a system architecture according to this application;
FIG. 4 shows a cloud service procedure;
FIG. 5 is a schematic flowchart of a data processing method according to an embodiment of this application;
FIG. 6 is a diagram of processing of a data processing method according to an embodiment of this application;
FIG. 7 is a diagram of effect according to an embodiment of this application;
FIG. 8 is a diagram of processing of a data processing method according to an embodiment of this application;
FIG. 9A is a diagram of effect according to an embodiment of this application;
FIG. 9B is a diagram of processing of a data processing method according to an embodiment of this application;
FIG. 9C is a diagram of effect according to an embodiment of this application;
FIG. 9D is a diagram of processing of a data processing method according to an embodiment of this application;
FIG. 10 is a diagram of a structure of a data processing apparatus according to an embodiment of this application;
FIG. 11 is a diagram of a structure of an execution device according to an embodiment of this application;
FIG. 12 is a diagram of a structure of a training device according to an embodiment of this application; and
FIG. 13 is a diagram of a structure of a chip according to an embodiment of this application.

### DESCRIPTION OF EMBODIMENTS

The following describes embodiments of the present invention with reference to the accompanying drawings in embodiments of the present invention. Terms used in implementations of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In this specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants thereof are intended to cover non-exclusive inclusion, so that a process, method, system, product, or device that includes a series of units is not necessarily limited to those units, but may include other units that are not expressly listed or are inherent to such a process, method, product, or device.

Terms "substantially (substantially)", "about (about)", and the like are used in this specification as approximate terms rather than degree terms, and are intended to take into account inherent deviations of measured values or calculated values that are known to a person of ordinary skill in the art. In addition, when embodiments of the present invention are described, "may (may)" is used to mean "one or more possible embodiments". Terms "use (use)", "using (using)", and "used (used)" used in this specification may be considered to be synonymous with terms "utilize (utilize)", "utilizing (utilizing)", and "utilized (utilized)" respectively. In addition, the term "example (exemplary)" is intended to mean an example or an illustration.

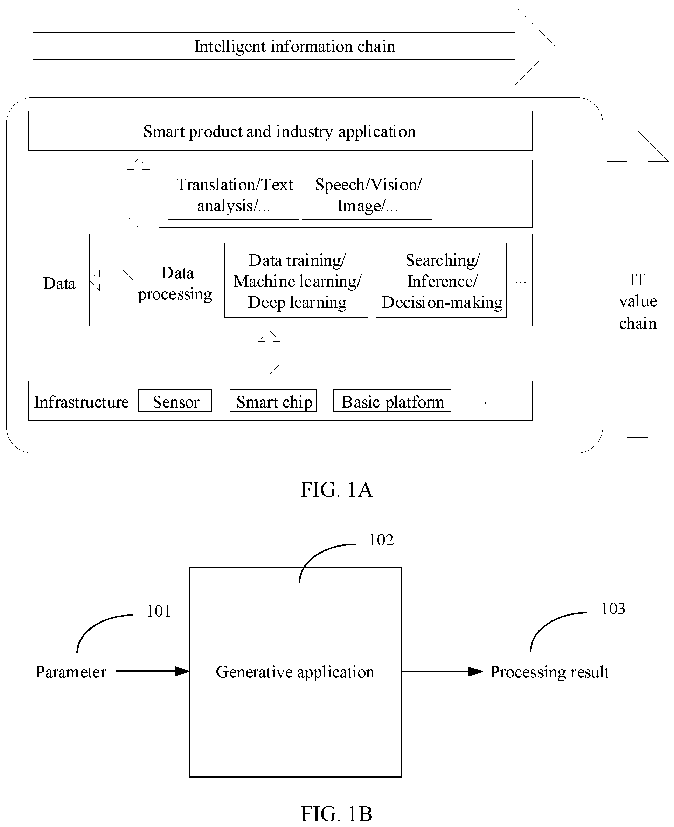

An overall working procedure of an artificial intelligence system is first described. FIG. 1A is diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain", from an underlying infrastructure and information (technology providing and processing implementation) of artificial intelligence to an industrial ecological process of a system, reflects value brought by artificial intelligence to the information technology industry.

### (1) Infrastructure

The infrastructure provides computing capability support for the artificial intelligence system, implements communication with the external world, and implements support by using a basic platform. The infrastructure communicates with the outside by using sensors. A computing capability is provided by smart chips (hardware acceleration chips such as a CPU, an NPU, a GPU, an ASIC, and an FPGA). The basic platforms include related platforms, for example, a distributed computing framework and a network, for assurance and support. The basic platforms may include a cloud storage and a computing network, an interconnection network, and the like. For example, the sensor communicates with the outside to obtain data, and the data is provided to a smart chip in a distributed computing system provided by the basic platform for computing.

### (2) Data

Data at an upper layer of the infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

### (3) Data processing

Data processing usually includes data training, machine learning, deep learning, searching, inference, decision-making, and the like.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formalized information based on an inference control policy. A typical function is searching and matching.

Decision-making is a process of making a decision after intelligent information is inferred, and usually provides functions such as classification, ranking, and prediction.

### (4) General capability

After data processing mentioned above is performed on data, some general capabilities may further be formed based on a data processing result, for example, an algorithm or a general system such as translation, text analysis, computer vision processing, speech recognition, and image recognition.

### (5) Smart product and industry application

The smart product and industry application are products and applications of the artificial intelligence system in various fields, and are encapsulation for an overall solution of artificial intelligence, to productize and apply intelligent information decision-making. Application fields of the intelligent information decision-making mainly include smart terminals, smart transportation, smart health care, autonomous driving, smart cities, and the like.

This application may be applied to the field of natural language processing in the field of artificial intelligence. The following uses natural language processing as an example to describe a plurality of application scenarios implemented in products.

An application scenario of this application is first described. This application may be applied to, but not limited to, an application (which may be briefly referred to as a generative application below) having an image generation function or a cloud service provided by a cloud-side server. The following separately provides descriptions.

### 1. Generative application

A product form in embodiments of this application may be a generative application. The generative application may run on a terminal device or a cloud-side server.

Image generation in embodiments of this application may be regenerating an image based on an input image. An image generation task may be image enhancement (for example, denoising), image noise addition, or the like. Image editing may be replacing some subjects (for example, a foreground or a background) in the image, or the like.

In a possible implementation, the generative application may implement an image generation task to obtain a processing result.

For example, the generative application may implement at least an image generation task that is based on a diffusion method, but this is not limited thereto.

In a possible implementation, a user may start a generative application installed on the terminal device, and input image data. The generative application may process the image data by using a model obtained through training according to a method provided in embodiments of this application, or process the image data by using the method provided in embodiments of this application, and present a processing result (a generated image) to the user (a presentation manner may be but is not limited to displaying, playing, saving, or uploading to a cloud side).

In a possible implementation, the user may start a generative application installed on the terminal device, and input image data. The generative application may send the image data to the cloud-side server. The cloud-side server processes the image data by using a model obtained through training according to a method provided in embodiments of this application, and returns a processing result to the terminal device. The terminal device may present the processing result to the user (a presentation manner may be but is not limited to displaying, playing, saving, or uploading to a cloud side).

The following describes the generative application in embodiments of this application separately from perspectives of a functional architecture and a product architecture for implementing a function.

FIG. 1B is a diagram of the functional architecture of the generative application according to an embodiment of this application.

In a possible implementation, as shown in FIG. 1B, the generative application 102 may receive an input parameter 101 (for example, including image data) and generate a processing result 103. The generative application 102 may be executed on (for example) at least one computer system, and include computer code. When the computer code is executed by one or more computers, the computer is enabled to execute the model obtained through training according to the method provided in embodiments of this application.

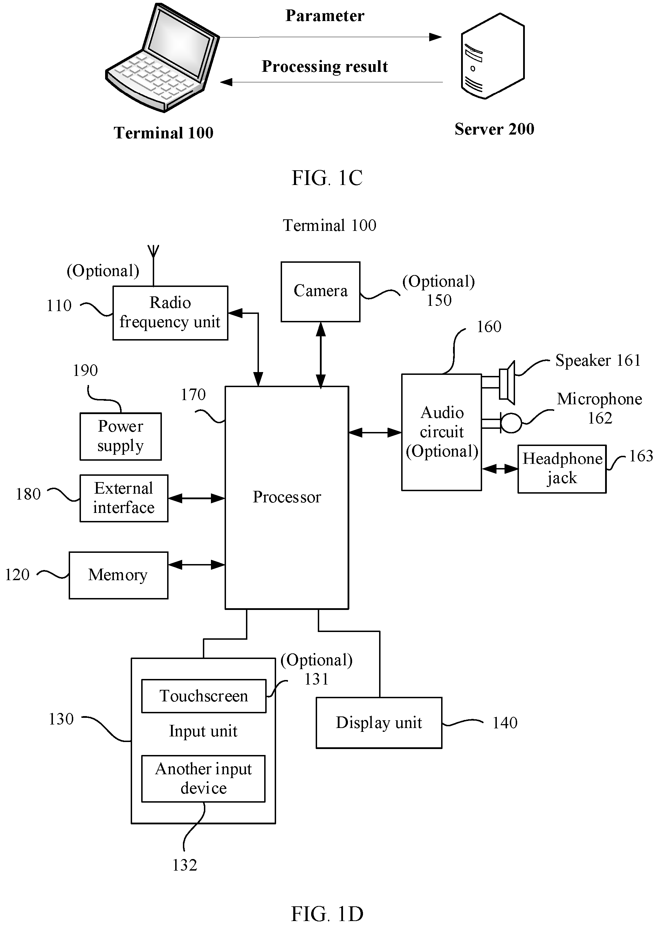

FIG. 1C is a diagram of an entity architecture for running a generative application according to an embodiment of this application.

FIG. 1C is a diagram of a system architecture. The system may include a terminal 100 and a server 200. The server 200 may include one or more servers (an example in which one server is included is used for description in FIG. 1C), and the server 200 may provide an image generation function or a natural language generation function for one or more terminals.

The generative application may be installed on the terminal 100, or a web page related to the image generation function or the natural language generation function may be opened on the terminal 100. The application or the web page may provide an interface. The terminal 100 may receive a related parameter input by the user on the interface of the image generation function or the natural language generation function, and send the parameter to the server 200. The server 200 may obtain a processing result based on the received parameter, and return the processing result to the terminal 100.

It should be understood that in some optional implementations, the terminal 100 may alternatively autonomously complete an action of obtaining a processing result based on a received parameter without a need to cooperate with the server. This is not limited in embodiments of this application.

The following describes a product form of the terminal 100 in FIG. 1C.

The terminal 100 in embodiments of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

FIG. 1D is a diagram of an optional hardware structure of the terminal 100.

With reference to FIG. 1D, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art may understand that FIG. 1D is merely an example of the terminal or a multi-function device and does not constitute a limitation on the terminal or the multi-function device. The terminal or the multi-function device may include more or fewer components than those shown in the figure, or some components may be combined, or a different component may be used.

The input unit 130 may be configured to: receive input digit or character information, and generate a key signal input related to a user setting and function control of the portable multi-function apparatus. Specifically, the input unit 130 may include a touchscreen 131 (optional) and/or another input device 132. The touchscreen 131 may collect a touch operation performed by the user on or near the touchscreen 131 (for example, an operation performed by the user on or near the touchscreen by using any appropriate object such as a finger, a joint, or a stylus), and drive a corresponding connection apparatus based on a preset program. The touchscreen may detect a touch action performed by the user on the touchscreen, convert the touch action into a touch signal, and send the touch signal to the processor 170, and can receive and execute a command sent by the processor 170. The touch signal includes at least touch point coordinate information. The touchscreen 131 may provide an input interface and an output interface between the terminal 100 and the user. In addition, the touchscreen may be of a plurality of types, such as a resistive type, a capacitive type, an infrared ray type, and a surface acoustic wave type. In addition to the touchscreen 131, the input unit 130 may include the another input device. Specifically, the another input device 132 may include but is not limited to one or more of a physical keyboard, a functional button (for example, a volume control button or an on/off button), a trackball, a mouse, and a joystick.

The another input device 132 may receive input image data or text data.

The display unit 140 may be configured to display information input by the user, information provided for the user, various menus of the terminal 100, an interaction interface, a file, and/or playing of any multimedia file. In embodiments of this application, the display unit 140 may be configured to display an interface, a processing result, and the like of the generative application.

The memory 120 may be configured to store instructions and data. The memory 120 may mainly include an instruction storage region and a data storage region. The data storage region may store various types of data such as a multimedia file and a text. The instruction storage region may store software units such as an operating system, an application, and instructions required by at least one function, or subsets and extended sets thereof. The memory 120 may further include a non-volatile random access memory, and provide hardware, software, a data resource, and the like in a management and computing processing device for the processor 170, to support control on software and an application. The memory 120 is further configured to: store a multimedia file, and run a program and store an application.

The processor 170 is a control center of the terminal 100, connects parts of the entire terminal 100 through various interfaces and lines, and executes various functions of the terminal 100 and processes data by running or executing the instructions stored in the memory 120 and invoking the data stored in the memory 120, to perform overall control on the terminal device. Optionally, the processor 170 may include one or more processing units. Preferably, an application processor and a modem processor may be integrated into the processor 170. The application processor mainly processes an operating system, a user interface, an application, and the like. The modem processor mainly processes wireless communication. It can be understood that the modem processor may not be integrated into the processor 170. In some embodiments, the processor and the memory may be implemented on a single chip. In some embodiments, the processor and the memory may be implemented on separate chips. The processor 170 may be further configured to: generate a corresponding operation control signal, send the operation control signal to a corresponding component in the computing processing device, and read and process data in software, especially read and process the data and the program in the memory 120, so that functional modules perform corresponding functions, to control a corresponding component to perform an operation as required by an instruction.

The memory 120 may be configured to store software code related to the data processing method. The processor 170 may perform steps of the data processing method of the chip, or may schedule other units (for example, the input unit 130 and the display unit 140) to implement corresponding functions.

The radio frequency unit 110 (optional) may be configured to receive and send information or receive and send signals in a call process. For example, after receiving downlink information of a base station, the radio frequency unit 110 sends the downlink information to the processor 170 for processing. In addition, the radio frequency unit 110 sends uplink-related data to the base station. Usually, an RF circuit includes but is not limited to an antenna, at least one amplifier, a transceiver, a coupler, a low noise amplifier (Low Noise Amplifier, LNA), and a duplexer. In addition, the radio frequency unit 110 may further communicate with a network device and another device through wireless communication. The wireless communication may use any communication standard or protocol, including but not limited to a global system for mobile communications (Global System for Mobile communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In embodiments of this application, the radio frequency unit 110 may send image data or text data to the server 200, and receive a processing result sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 by using a power management system, so that functions such as charging and discharging management and power consumption management are implemented by using the power management system.

The terminal 100 further includes the external interface 180. The external interface may be a standard micro USB interface, or may be a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein again. Some or all of methods described below may be applied to the terminal 100 shown in FIG. 1D.

The following describes a product form of the server 200 in FIG. 1C.

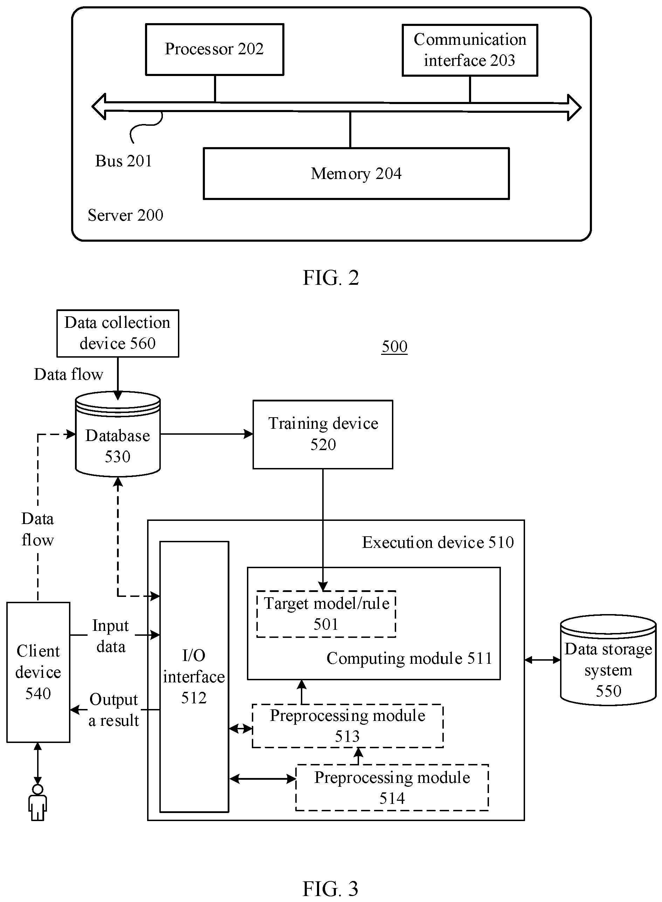

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used to represent the bus in FIG. 2, but this does not mean that there is only one bus or only one type of bus.

The processor 202 may be any one or more of processors such as a central processing unit (central processing unit, CPU), a graphics processing unit (graphics processing unit, GPU), a microprocessor (microprocessor, MP), or a digital signal processor (digital signal processor, DSP).

The memory 204 may include a volatile memory (volatile memory), for example, a random access memory (random access memory, RAM). The memory 204 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store software code related to the data processing method. The processor 202 may perform steps of the data processing method of a chip, or may schedule another unit to implement a corresponding function.

It should be understood that the terminal 100 and the server 200 may be centralized or distributed devices. Processors (for example, the processor 170 and the processor 202) in the terminal 100 and the server 200 each may be a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the processor may be a hardware system that has an instruction execution function, for example, a CPU or a DSP, or may be a hardware system that does not have an instruction execution function, for example, an ASIC or an FPGA, or may be a combination of the hardware system that does not have the instruction execution function and the hardware system that has the instruction execution function.

It should be understood that steps related to a model inference process in embodiments of this application relate to an AI-related operation. When the AI operation is performed, an instruction execution architecture of the terminal device and the server is not limited to the architecture in which the processor and the memory are combined. The system architecture provided in embodiments of this application is described in detail below with reference to FIG. 3.

FIG. 3 is a diagram of the system architecture according to an embodiment of this application. As shown in FIG. 3, the system architecture 500 includes an execution device 510, a training device 520, a database 530, a client device 540, a data storage system 550, and a data collection system 560.

The execution device 510 includes a computing module 511, an I/O interface 512, a preprocessing module 513, and a preprocessing module 514. The computing module 511 may include a target model/rule 501, and the preprocessing module 513 and the preprocessing module 514 are optional.

The execution device 510 may be the terminal device or the server that runs the generative application.

The data collection device 560 is configured to collect a training sample. The training sample may be image data or the like. After collecting the training sample, the data collection device 560 stores the training sample in the database 530.

The training device 520 may perform a pre-training process on a to-be-trained neural network (for example, a neural network model (for example, including a modality adaptation module, a first generative model, and a second generative model) in embodiments of this application) based on a training sample maintained in the database 530, to obtain the target model/rule 501.

It should be understood that the training device 520 may perform the pre-training process on the to-be-trained neural network based on the training sample maintained in the database 530, or perform fine-tuning on a model based on pre-training.

It should be noted that during actual application, the training sample maintained in the database 530 is not necessarily collected by the data collection device 560, and may be received from another device. In addition, it should be noted that the training device 520 does not necessarily train the target model/rule 501 completely based on the training sample maintained in the database 530, and may perform model training by obtaining a training sample from a cloud or another place. The foregoing descriptions should not be construed as a limitation on embodiments of this application.

The target model/rule 501 obtained through training by the training device 520 may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or a vehicle-mounted terminal, or may be a server or the like.

Specifically, the training device 520 may transfer a trained model to the execution device 510.

In FIG. 3, the input/output (input/output, I/O) interface 512 is configured for the execution device 510, and is configured to exchange data with an external device. A user may input data (for example, image data or text data in embodiments of this application) to the I/O interface 512 through the client device 540.

The preprocessing module 513 and the preprocessing module 514 are configured to perform preprocessing based on the input data received by the I/O interface 512. It should be understood that there may be no preprocessing module 513 and preprocessing module 514, or there may be only one preprocessing module. When the preprocessing module 513 and the preprocessing module 514 do not exist, the computing module 511 may be directly used to process the input data.

When the execution device 510 preprocesses the input data, or when the computing module 511 of the execution device 510 performs related processing such as calculation, the execution device 510 may invoke data, code, and the like in the data storage system 550 for corresponding processing, or may store, into the data storage system 550, data, instructions, and the like obtained through corresponding processing.

Finally, the I/O interface 512 provides a processing result for the client device 540, to provide the processing result for the user.

In the case shown in FIG. 3, the user may manually give input data, and "manually giving the input data" may be operated on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner of displaying, a sound, an action, or the like. The client device 540 may also be used as a data collection terminal, collect the input data that is input to the I/O interface 512 and that is shown in the figure and the output result output from the I/O interface 512, use the input data and the output result as new sample data, and store the new sample data in the database 530. Certainly, the client device 540 may alternatively not perform collection. Instead, the I/O interface 512 directly stores, in the database 530 as new sample data, the input data input into the I/O interface 512 and the output result output from the I/O interface 512 that are shown in the figure.

It should be noted that FIG. 3 is merely a diagram of the system architecture according to an embodiment of this application. A location relationship between a device, a component, a module, and the like shown in the figure constitutes no limitation. For example, in FIG. 3, the data storage system 550 is an external memory relative to the execution device 510. In another case, the data storage system 550 may alternatively be disposed in the execution device 510. It should be understood that the execution device 510 may be deployed in the client device 540.

Details from a perspective of model inference are as follows.

In embodiments of this application, the computing module 511 of the execution device 510 may obtain the code stored in the data storage system 550, to implement steps related to the model inference process in embodiments of this application.

In embodiments of this application, the computing module 511 of the execution device 510 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the training device 520 may be a hardware system having an instruction execution function, for example, a CPU or a DSP, or may be a hardware system having no instruction execution function, for example, an ASIC or an FPGA, or may be a combination of the hardware system having no instruction execution function and the hardware system having an instruction execution function.

Specifically, the computing module 511 of the execution device 510 may be the hardware system having an instruction execution function. The steps related to the model inference process provided in embodiments of this application may be software code stored in a memory. The computing module 511 of the execution device 510 may obtain the software code from the memory, and execute the obtained software code to implement the steps related to the model inference process provided in embodiments of this application.

It should be understood that the computing module 511 of the execution device 510 may be the combination of the hardware system having no instruction execution function and the hardware system having the instruction execution function. Some of the steps related to the model inference process provided in embodiments of this application may alternatively be implemented by the hardware system having no instruction execution function in the computing module 511 of the execution device 510. This is not limited herein.

Details from a perspective of model training are as follows.

In embodiments of this application, the training device 520 may obtain code stored in a memory (which is not shown in FIG. 3, and may be integrated into the training device 520 or separately deployed from the training device 520), to implement steps related to model training in embodiments of this application.

In embodiments of this application, the training device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the training device 520 may be a hardware system having an instruction execution function, for example, a CPU or a DSP, or may be a hardware system having no instruction execution function, for example, an ASIC or an FPGA, or may be a combination of the hardware system having no instruction execution function and the hardware system having an instruction execution function.

It should be understood that the training device 520 may be the combination of the hardware system having no instruction execution function and the hardware system having the instruction execution function. Some of the steps related to model training provided in embodiments of this application may be implemented by the hardware system having no instruction execution function in the training device 520. This is not limited herein.

### 3. Image generation function-related cloud service provided by a server:

In a possible implementation, the server may provide an image generation function-related service for a device side through an application programming interface (application programming interface, API).

A terminal device may send a related parameter (for example, data such as an image) to the server through the API provided by a cloud. The server may obtain a processing result or the like based on the received parameter, and return the processing result to the terminal.

For descriptions of the terminal and the server, refer to the descriptions in the foregoing embodiments. Details are not described herein again.

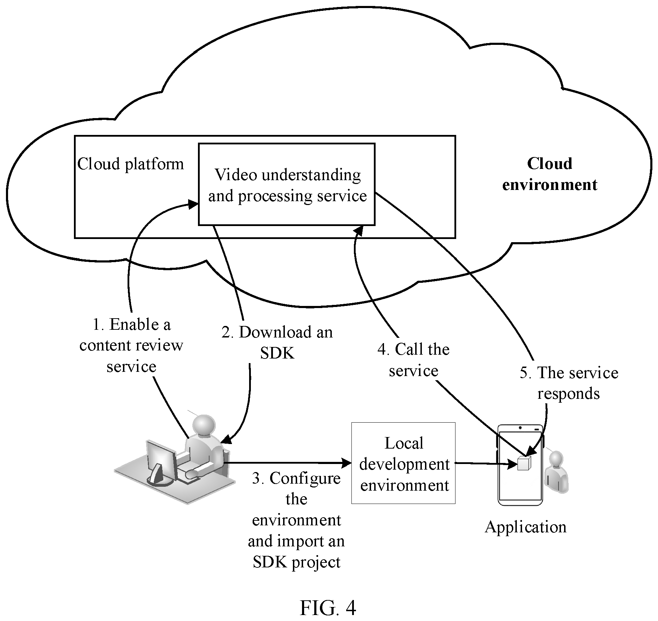

FIG. 4 shows a procedure of using an image generation function-related cloud service provided by a cloud platform.
1. Enable and purchase the image generation service.
2. A user may download a software development kit (software development kit, SDK) corresponding to the image generation service. Usually, the cloud platform provides SDKs of a plurality of development versions for a user to select based on a development environment requirement, for example, a Java-version SDK, a Python-version SDK, a PHP-version SDK, and an Android-version SDK.
3. After locally downloading an SDK of a corresponding version based on the requirement, the user imports an SDK project to a local development environment, and performs configuration and debugging in the local development environment. Another function may be further developed in the local development environment, to form an application that integrates an image generation function-related capability.
4. During use of an image generation function-related application, when the image generation function is required, invocation of an image generation function-related API may be triggered. When the application triggers the image generation function, an API request is initiated to a running instance of the image generation function-related service in a cloud environment. The API request carries image data, and the running instance in the cloud environment processes the image to obtain a processing result.
5. The cloud environment returns the processing result to the application. In this way, the image generation function is invoked once.

Embodiments of this application relate to massive application of a neural network. Therefore, for ease of understanding, the following first describes related terms and related concepts such as the neural network in embodiments of this application.

### (1) Neural network

The neural network may include a neuron. The neuron may be an operation unit that uses *xₛ* (namely, input data) and an intercept of 1 as an input. An output of the operation unit may be as follows: ${h}_{W , b} \left(x\right) = f \left({W}^{T}x\right) = f \left({\sum }_{s = 1}^{n} {W}_{s} {x}_{s} + b\right)$

*s*=1, 2, ..., or n. n is a natural number greater than 1, *Wₛ* is a weight of *xₛ*, *b* is a bias of the neuron, and *f* is an activation function (activation functions) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network formed by connecting a plurality of single neurons together. To be specific, an output of one neuron may be an input to another neuron. An input of each neuron may be connected to a local receptive field of a previous layer to extract a feature of the local receptive field. The local receptive field may be a region including several neurons.

(2) A convolutional neural network (convolutional neuron network, CNN) is a deep neural network with a convolutional structure. The convolutional neural network includes a feature extractor that includes a convolutional layer and a sampling sublayer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. A convolutional layer usually includes several feature planes, and each feature plane may include some neurons arranged in a rectangle. Neural units in a same feature plane share a weight, and the weight shared herein is a convolution kernel. Weight sharing may be understood as that a feature extraction manner is irrelevant to a position. The convolution kernel may be in a form of a matrix of a random size. In a training process of the convolutional neural network, a proper weight may be obtained for the convolution kernel through learning. In addition, benefits directly brought by weight sharing are that connections between layers of the convolutional neural network are reduced, while an overfitting risk is reduced.

The CNN is a very common neural network, and the following primarily describes a structure of the CNN in detail with reference to FIG. 4. As described in the foregoing basic concepts, the convolutional neural network is a deep neural network with a convolutional structure, and is a deep learning (deep learning) architecture. In the deep learning architecture, multi-layer learning is performed at different abstract levels by using a machine learning algorithm. As a deep learning architecture, the CNN is a feed-forward (feed-forward) artificial neural network. Each neuron in the feed-forward artificial neural network may respond to an image input to the feed-forward artificial neural network.

### (3) Deep neural network

The deep neural network (Deep Neural Network, DNN), also referred to as a multi-layer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Usually, a first layer is the input layer, a last layer is the output layer, and an intermediate layer is the hidden layer. Layers are fully connected. To be specific, any neuron at an i^{th} layer is necessarily connected to any neuron at an (i+1)^{th} layer. Although the DNN seems to be complex, the DNN is actually not complex in terms of work at each layer, and is simply expressed as the following linear relationship expression: y̅ = α(Wx̅ + b̅ ) . x̅ is an input vector, y̅ is an output vector, b̅ is an offset vector, W is a weight matrix (also referred to as a coefficient), and α() is an activation function. At each layer, such a simple operation is performed on the input vector x̅, to obtain the output vector y̅. Because the DNN has a large quantity of layers, a quantity of coefficients W and a quantity of offset vectors b̅ are also large. Definitions of these parameters in the DNN are as follows: The coefficient W is used as an example. It is assumed that in a DNN having three layers, a linear coefficient from a 4^{th} neuron at the 2^{nd} layer to a 2^{nd} neuron at the 3^{rd} layer is defined as ${w}_{24}^{3}$. The superscript 3 represents a layer at which the coefficient W is located, and the subscript corresponds to an output thirdlayer index 2 and an input second-layer index 4. In conclusion, a coefficient from a k^{th} neuron at an (L-1)^{th} layer to a j^{th} neuron at an L^{th} layer is defined as ${W}_{jk}^{L}$. It should be noted that the input layer does not have the parameter W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

### (4) Loss function

In a process of training a deep neural network, because it is expected that an output of the deep neural network is as close as possible to a value that actually needs to be predicted, a current predicted value of the network and an actually expected target value may be compared, and then a weight vector of each layer of the neural network is updated based on a difference between the current predicted value and the target value (certainly, before a first update, there is usually an initialization process, that is, preconfiguring a parameter for each layer of the deep neural network). For example, if the predicted value of the network is large, the weight vector is adjusted to decrease the predicted value, and adjustment is continuously performed, until the deep neural network can predict the actually expected target value. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

### (5) Back propagation algorithm

An error back propagation (back propagation, BP) algorithm may be used to correct a value of a parameter in an initial model in a training process, so that an error loss of the model becomes smaller. Specifically, an input signal is transferred forward until an error loss occurs at output, and the parameter in the initial model is updated based on back propagation error loss information, to make the error loss converge. The back propagation algorithm is an error-loss-centered back propagation motion intended to obtain a parameter, such as a weight matrix, of an optimal model.

### (6) Diffusion model (diffusion model)

The diffusion model is a generative model used to generate data such as an image and a text. A core idea of the diffusion model is to restore original data by performing noise diffusion on the data and then gradually removing noise. The diffusion model includes two phases: a forward process (noise diffusion) and a reverse process (denoising restoration).

A purpose of an image enhancement technology is to convert a low-quality image into a high-quality image. For example, an image super-resolution technology is used to convert a low-resolution image into a highresolution image, which improves image definition and detail authenticity.

An existing image super-resolution technology is usually to fit a mapping between a low-definition image and a high-definition image. To better restore details, an existing method uses a pre-trained generative model.

However, content of an input image is usually not understood in the existing method. As a result, quality of a generated image is low.

To resolve the foregoing problem, embodiments of this application provide a data processing method. The following describes in detail the data processing method in embodiments of this application with reference to accompanying drawings.

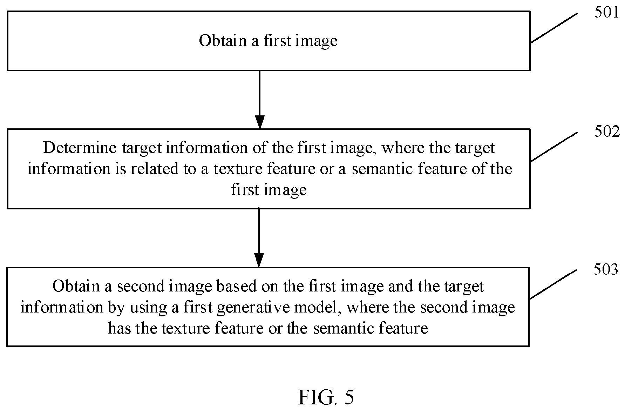

FIG. 5 is a schematic flowchart of a data processing method according to an embodiment of this application. As shown in FIG. 5, the data processing method provided in this embodiment of this application may include steps 501 to 503. These steps are separately described below in detail.

501: Obtain a first image.

In this embodiment of this application, a target task may be executed on the first image. The target task is a task of generating a new image based on an original image, and a new image needs to be generated in the task.

For example, the target task is one of the following: image enhancement, image noise adding, image style transformation, and image editing. Image enhancement is used as an example. Image enhancement may be but is not limited to denoising, deblurring, deraining, defogging, dark light enhancement, contrast enhancement, high dynamic range, and the like.

502: Generate target information based on the first image, where the target information indicates a texture feature or a semantic feature of the first image.

In a conventional technology, when an image is enhanced, for example, when super-resolution processing is performed, noise of the image and the image are input into a generative network, to obtain a super-resolution processed image. However, the generative network usually does not understand content of the input image, and cannot use common sense to accurately restore semantics and texture of an object in the image. In particular, effect of an image generated in a real scenario is poorer.

Texture is a visual feature that reflects a homogeneity phenomenon of an image, and the texture reflects organization and arrangement attributes of a surface structure that is of a surface of an object and that changes slowly or periodically. The texture is represented by grayscale distribution of pixels and their surrounding spatial neighborhoods, that is, local texture information. In addition, the local texture information is different from image features such as grayscale and color to different degrees, and repeatability of the local texture information represents global texture information. A texture feature reflects a property of a global feature, and also describes a surface property of the image or a scene that corresponds to an image region. However, because the texture is only a feature of the surface of the object, and cannot completely reflect an essential attribute of the object, high-level image content cannot be obtained by only using the texture feature. Different from the color feature, the texture feature is not a pixelbased feature, but needs to be statistically calculated in a region including a plurality of pixels.

Semantics of an image is a meaning of image content, is not limited to a description using a natural language word, and may include a way in which a human visual system understands the image. For example, for an image of a puppy, semantics of the image may be interpreted as including a natural language word "puppy" and attributes such as a breed and a gender of the puppy. Alternatively, a symbol may be used to represent the concept, and the symbol points to a puppy having a same feature as the puppy in the image. In addition, people can get an abstract impression from the image. The impression helps people associate another similar puppy image with the known image when people see the another similar puppy image.

In this application, the target information that is related to the texture feature or the semantic feature and that is of the first image is determined, and the target information is input into a generative model as a prior. This can help the generative model understand content and texture of the input image, and therefore texture and semantic details in a generated image can be better restored. In this way, a generated image of higher quality is obtained, and generalization of the model in different scenarios can also be improved.

In a possible implementation, when the target information is generated based on the first image, the target information that is of the first image and that is input by a user may be received. In other words, a structure and texture of an object can be better restored based on prompt information provided by the user, which improves image fidelity and quality.

In a possible implementation, the target information may include an encoding of the texture feature of the first image.

For example, the first image may be processed by using an encoder (for example, an image encoder) to obtain the encoding of the texture feature of the first image.

In a possible implementation, the target information may include an encoding of the semantic feature of the first image.

For example, the first image may be processed by using an encoder (for example, a text encoder) to obtain the encoding of the texture feature of the first image.

In a possible implementation, the target information may include an encoding that is of the first image and that combines the texture feature and the semantic feature.

For example, the first image may be processed by using encoders (for example, a text encoder and an image encoder), to separately obtain an encoding of the texture feature and an encoding of the semantic feature of the first image. Then, the encoding of the texture feature and the encoding of the semantic feature of the first image are combined by using a modality adaptation module, to obtain the encoding combining the texture feature and the semantic feature.

In a possible implementation, the target information may include a natural language description of the texture feature of the first image.

For example, the first image may be processed by using a machine learning model. The machine learning model may be trained to have a capability of obtaining, based on an image, a natural language description of a texture feature of the image.

In a possible implementation, the target information may include a natural language description of the semantic feature of the first image.

For example, the first image may be processed by using a machine learning model. The machine learning model may be trained to have a capability of obtaining, based on an image, a natural language description of a semantic feature of the image.

In a possible implementation, the target information may include a natural language description that is of the first image and that combines the texture feature and the semantic feature.

For example, the first image may be processed by using a machine learning model. The machine learning model may be trained to have a capability of obtaining, based on an image, a natural language description of a texture feature and a semantic feature of the image.

In addition, in addition to the encoding or the natural language description described above, the semantic feature may alternatively be a semantic segmentation map, a semantic label of an image, a main region of an image, a classification label of an image, or the like. This is not limited in embodiments of this application.

In a possible implementation, when the target information is generated based on the first image, the target information of the first image may be obtained through recognition based on the first image. For example, the first image may be processed by using a pre-trained machine learning model, to obtain the target information of the first image.

For example, in a possible implementation, the encoding of the texture feature of the first image is obtained based on the first image by using the image encoder; the encoding of the semantic feature of the first image is obtained based on a text description of the first image by using the text encoder; or the encoding combining the texture feature and the semantic feature is obtained based on the encoding of the texture feature and the encoding of the semantic feature by using the modality adaptation module.

The following describes a network used to obtain the encoding of the semantic feature and the encoding of the texture feature in embodiments of this application, and a training process of the network.

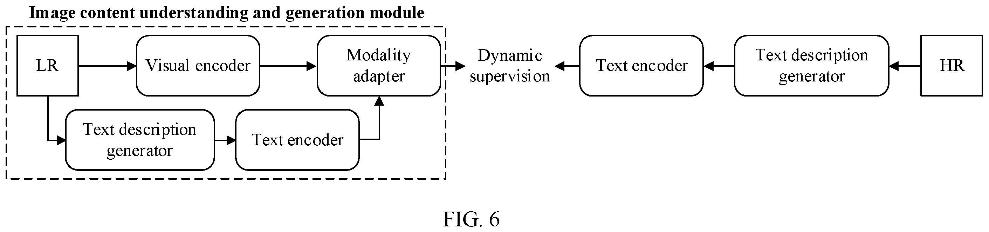

FIG. 6 is a diagram of a model according to an embodiment of this application. An image content understanding and generation module may be the network configured to obtain the encoding of the semantic feature and the encoding of the texture feature in the foregoing embodiment.

An example in which a task implemented by the generative model is image enhancement is used. A structure of the image content understanding module may be shown in a dashed box in FIG. 6. An input is a low-definition image, and an architecture of the network includes two branches. In a first branch, a visual encoder is used to encode a texture feature of the low-definition image. In a second branch, a text description generator is used to generate a text description of the image, and then a text encoder is used to encode a semantic feature of the low-definition image. Encoding results of the two branches are input to a modality adapter, and an encoding combining texture and semantic is output. During actual application, the two branches can be used separately, or the two branches are both used. The condition helps the generative model understand the low-definition image and better restore a structure and details of an object in the image.

In the training process, a high-definition image is sequentially processed by the text description generator and the text encoder, to obtain a corresponding text encoding. Because lengths of valid text encodings vary, only a valid part is used as a supervision target, which is referred to as dynamic supervision.

In addition, during actual application, the text description generator in the second branch may be replaced with a text description specified by the user, and therefore interaction with the user is supported.

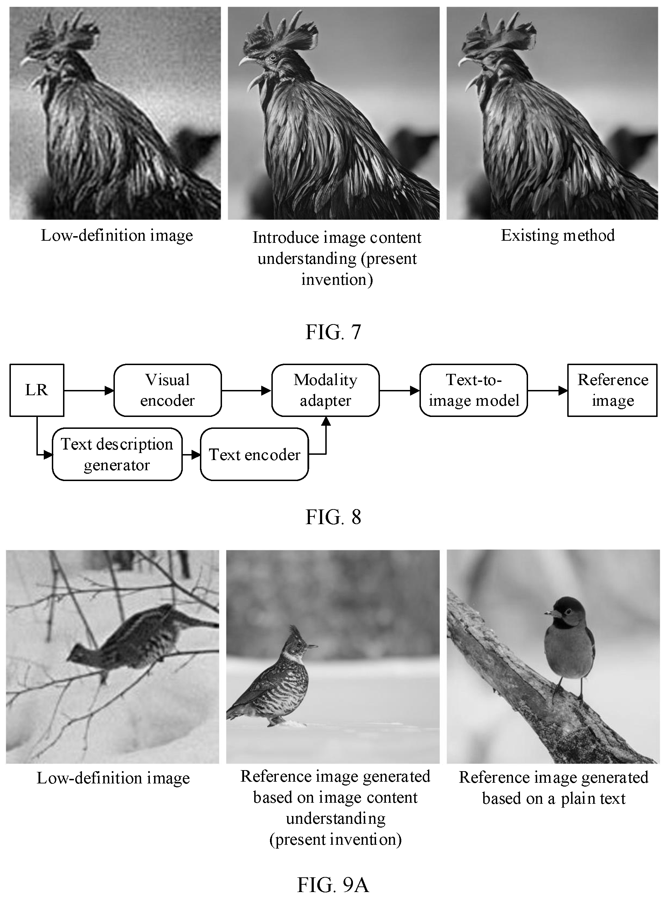

As shown in FIG. 7, after image content understanding is introduced in embodiments of this application, a shape, a structure, texture, and details of a generated chicken are better restored.

In a possible implementation, the target information includes an image that has the texture feature or the semantic feature of the first image and that is different from the first image. That the image is different from the first image may be understood that content of the image is not completely the same as that of the first image. For example, pixel values at some locations or at corresponding locations are different.

In the foregoing manner, another image (which may also be referred to as a reference image in this application) having the texture feature or the semantic feature of the first image is used as prior information of the generative model, and is input into the generative model in an image manner, to explicitly guide generation of texture details. This can help the generative model understand content and texture of the input image, and therefore texture and semantic details in a generated image can be better restored. In this way, a generated image of higher quality is obtained, and generalization of the model in different scenarios can also be improved.

In a possible implementation, an image may be generated based on the encoding of the texture feature and/or the semantic feature of the first image by using the generative model (for example, a text-to-image model). The generated image may have the texture feature or the semantic feature of the first image, and is different from the first image. Although an input is the encoding of the semantic feature or the texture feature of the first image, because the generative network can usually generate an image with richer texture and more accurate semantics, the image obtained by using the generative network based on the encoding of the texture feature or the semantic feature of the first image can have richer and more accurate texture details and semantics than the first image. Further, quality of an image generated based on a high-definition image is higher.

In a possible implementation, an image having the texture feature or the semantic feature of the first image may be obtained based on the encoding or the natural language description of the texture feature of the first image, or the encoding or the natural language description of the semantic feature of the first image by using a second generative model.

In a possible implementation, an image having the texture feature or the semantic feature of the first image may be selected from a plurality of images based on the encoding or the natural language description of the texture feature of the first image, or the encoding or the natural language description of the semantic feature of the first image. There are a plurality of manners of obtaining the reference image, for example, extracting a feature of the first image (for example, the encoding or the natural language description of the texture feature, or the encoding or the natural language description of the semantic feature of the first image), and obtaining, through matching, a most similar image from an image library.

A reference image generation module based on content understanding is introduced to automatically generate a reference image whose semantics or texture is aligned with that of the low-definition image, to explicitly guide generation of details. A high-quality reference image whose semantics is aligned with that of the low-definition image or whose texture is consistent with that of the low-definition image may be generated, to guide the model to generate better texture details, to improve generalization of the model.

FIG. 8 is a schematic flowchart of generating the reference image based on image content understanding. Specifically, based on a trained image content understanding module, semantic and texture encoding results of the trained image content understanding module may be input into the text-to image model, to generate a reference image whose semantics is aligned with that of a low-definition image and whose texture is the consistent with that of the low-definition image, to explicitly guide generation of texture details. During actual applications, the module can be replaced with a reference image specified by the user, and therefore, interaction with the user is supported.

As shown in FIG. 9A, in this embodiment of this application, semantics and texture of the reference image generated based on image content understanding are more consistent with those of a low-definition image than a reference image generated based on a plain text, and helps guide restoration of the low-definition image. As shown in FIG. 9A, after guidance based on the reference image is introduced, a result with rich texture details and better authenticity can be generated in the present invention.

In addition, the target information may further indicate an improvement direction of quality of a generation result of the first generative model, and is input into the generative model as the prior information, which can help better optimize the generative model, and improve quality of a generated image.

In a possible implementation, the first generative model is configured to execute the target task. The target information further indicates a feature that needs to be possessed by a high-quality result obtained after the first generative model executes the target task on the first image, and the feature that needs to be possessed is not possessed by the first image.

The improvement direction of quality may be: What kind of generated image obtained based on the first image by using the first generative model is a generated image of higher quality. The improvement direction of quality may describe an improvement direction of image quality at a fine-grained level. Optionally, the information may be input into the generative model in a text manner. For example, in an image enhancement task, for a low-definition image of a cat, the target information may include "a cat with clear fur".

In a possible implementation, the first image may be processed by using the machine learning model, to obtain information of the improvement direction of quality (that is, the information, in the foregoing embodiment, that indicates a feature that a high-quality result obtained after the first generative model executes the target task on the first image needs to possess).

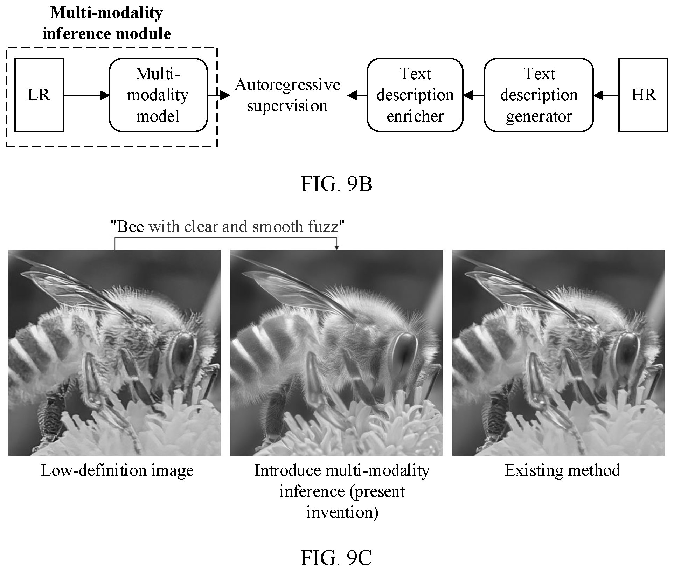

The machine learning model used to obtain the information of the improvement direction of quality may be referred to as a multi-modal inference module. With reference to FIG. 9B, a structure of the modality inference module is shown in a dashed box in FIG. 9B. An input is a low-definition image, and after the low-definition image is processed by the multi-modality model, a text description of an improvement direction of image quality is output, to guide the generative model to improve the image quality. In the training process, a high-definition image is sequentially processed by the text description generator and a text generation enricher, to obtain the text description that is of the improvement direction of image quality and that is used as a supervision target.

In addition, during actual application, the multi-modality model may be replaced with a text description that is of an improvement direction of image quality and that is specified by the user, and therefore interaction with the user is supported.

As shown in FIG. 9C, after multi-modality inference is introduced in the present invention, an optimization direction of "clear and smooth fuzz" is specified, and a result with richer texture details and better authenticity is obtained.

503: Obtain a second image based on the first image and the target information by using a first generative model, where the second image has the texture feature or the semantic feature.

In this embodiment of this application, the target information and the first image may be input into the first generative model as generation conditions, and the second image is obtained by using the first generative model. The second image has the texture feature or the semantic feature.

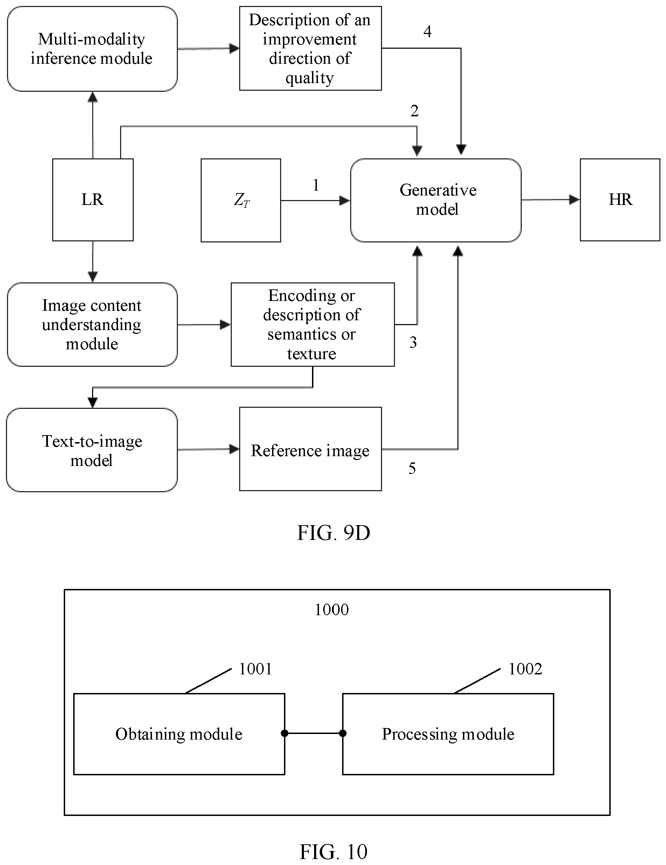

An image enhancement task is used as an example. An application architecture in this embodiment of this application may be shown in FIG. 9D. Inputs of the generative model may include noise (z_{T}, a condition 1) and a low-definition image (a condition 2), and may support one or more conditions of an encoding or a description (a condition 3) of semantics or texture, a description (a condition 4) of an improvement direction of quality, and a reference image (a condition 5).

In a possible implementation, the first generative model is a diffusion model, the second image is obtained, by using the diffusion model, by using the target information and the first image as a condition input of a noise-adding module of the diffusion model.

In an architecture of the diffusion model, the noise-adding module of the diffusion model performs noise adding for a plurality of times (that is, noise adding of a plurality of step lengths) on an original image (or a feature representation of an original image). The noise-adding module of the diffusion model may predict noise added in each step length, and perform denoising based on the predicted noise, to obtain a generated new image.

In this embodiment of this application, the image and the target information are used as the conditions, and the foregoing conditions may be input into the noise-adding module of the diffusion model. Optionally, a denoising model may be a neural network of a UNet architecture. The UNet is an end-to-end convolutional neural network, and is mainly used for image segmentation. The UNet is characterized by a U-shaped structure, and includes an encoder and a decoder. The encoder uses a convolution layer and a maximum pooling layer to extract and downsample a feature. The decoder performs feature fusion and restoration through upsampling and a jump connection. The architecture is mainly used to predict noise added during image and text feature fronthaul in a diffusion framework. Specifically, Gaussian noise may be gradually added to a sample based on a variance provided by *βₜ*, to generate a series of hidden variables *x*₁,*x*₂,...,*x_{T}*. *t* represents a quantity of steps (or may be referred to as step lengths) for adding noise, and N represents normal distribution. $q \left({x}_{t}\left|{x}_{t - 1}\right.\right) = N \left({x}_{t};\sqrt{1 - {β}_{t}}{x}_{t - 1},{β}_{t}I\right)$

Then, a denoising module Φ_{θ}(*xₜ*,*t*) (that is, the denoising module of the diffusion model) is learned to approximate true posterior distribution. *u_{θ}* and *Σ_{θ}* represent a mean value and a variance predicted by the model respectively. ${p}_{θ} \left({x}_{t - 1}\left|{x}_{t}\right.\right) = N \left({u}_{θ}\left({x}_{t}, t\right),{Σ}_{θ}\left({x}_{t}, t\right)\right)$

This helps perform a reverse denoising process for sampling: starting from random noise *x_{T}*~N(0,*I*), gradually reducing noise, and finally obtaining a sample *x*₀. An existing method uses a denoising network *Φ_{θ}*(*xₜ*,*t*) that predicts noise components of the noise sample and the following training objective: $L = {E}_{x , ϵ , t} {\left‖ϵ-{Φ}_{θ}\left({x}_{t}, t\right)\right‖}^{2}$

t may be evenly sampled from 1,2, ... , T, and *ε* represents noise added in each step of the model.

It should be understood that the generative model in this embodiment of this application may alternatively be in another model architecture other than the diffusion model. This is not limited in this application.

The following describes beneficial effects of embodiments of this application based on experimental results. As shown in Table 1, in public datasets of RealSR and DRealSR, results of an image super-resolution method based on understanding and inference proposed in the present invention are better than those of an existing optimal algorithm, including Real-ESRGAN+ based on a generative adversarial network and StableSR based on a diffusion model. In addition, the present invention significantly improves understanding and reasoning capabilities and generalization of the model.

**Table 1**

| Dataset | Metric | Real-ESRGAN+ | StableSR | Present invention |
|---|---|---|---|---|
| RealSR | LPIPS↓ | 0.2803 | 0.2536 | 0.2438 |
| | FID↓ | 87.00 | 84.06 | 80.82 |
| | DISTS↓ | 0.2028 | 0.1867 | 0.1826 |
| DRealSR | LPIPS↓ | 0.3239 | 0.2920 | 0.2702 |
| | FID↓ | 74.72 | 75.83 | 71.22 |
| | DISTS↓ | 0.2216 | 0.2048 | 0.1977 |

FIG. 10 is a diagram of a structure of a data processing apparatus according to an embodiment of this application. As shown in FIG. 10, the data processing apparatus 1000 provided in this embodiment of this application includes the following modules.

An obtaining module 1001 is configured to obtain a first image.

For specific descriptions of the obtaining module 1001, refer to the descriptions of step 501 in the foregoing embodiment. Details are not described herein again.

A processing module 1002 is configured to: generate target information based on the first image, where the target information indicates a texture feature or a semantic feature of the first image; and obtain a second image based on the first image and the target information by using a first generative model, where the second image has the texture feature or the semantic feature.

For specific descriptions of the processing module 1002, refer to the descriptions of steps 502 and 503 in the foregoing embodiment. Details are not described herein again.

In a possible implementation, the first generative model is configured to execute the target task, and the target task is one of the following: image enhancement, image noise adding, image style transformation, and image editing.

In a possible implementation, the processing module 1002 is specifically configured to:
recognize and obtain, based on the first image, the target information of the first image; or
receive the target information that is of the first image and that is input by a user.

In a possible implementation, the target information includes at least one of the following:
an encoding of the texture feature of the first image, an encoding of the semantic feature, an encoding combining the texture feature and the semantic feature, a natural language description of the texture feature of the first image, a natural language description of the semantic feature, or a natural language description combining the texture feature and the semantic feature.

In a possible implementation, the processing module 1002 is specifically configured to:
obtain the encoding of the texture feature of the first image based on the first image by using an image encoder;
obtain the encoding of the semantic feature of the first image based on a text description of the first image by using a text encoder; or
obtain, based on the encoding of the texture feature and the encoding of the semantic feature by using a modality adaptation module, the encoding combining the texture feature and the semantic feature.

In a possible implementation, the target information includes an image that has the texture feature or the semantic feature of the first image and that is different from the first image.

In a possible implementation, the processing module 1002 is specifically configured to:
obtain, based on the encoding or the natural language description of the texture feature of the first image, or the encoding or the natural language description of the semantic feature of the first image by using a second generative model, an image having the texture feature or the semantic feature of the first image; or
select, from a plurality of images based on the encoding or the natural language description of the texture feature of the first image, or the encoding or the natural language description of the semantic feature of the first image, an image having the texture feature or the semantic feature of the first image.

In a possible implementation, the first generative model is configured to execute the target task. The target information further indicates a feature that needs to be possessed by a high-quality result obtained after the first generative model executes the target task on the first image, and the feature that needs to be possessed is not possessed by the first image.

In a possible implementation, the first generative model is a diffusion model, and the processing module 1002 is specifically configured to:
obtain, by using the diffusion model, the second image by using the target information and the first image as a condition input of a noise-adding module of the diffusion model.

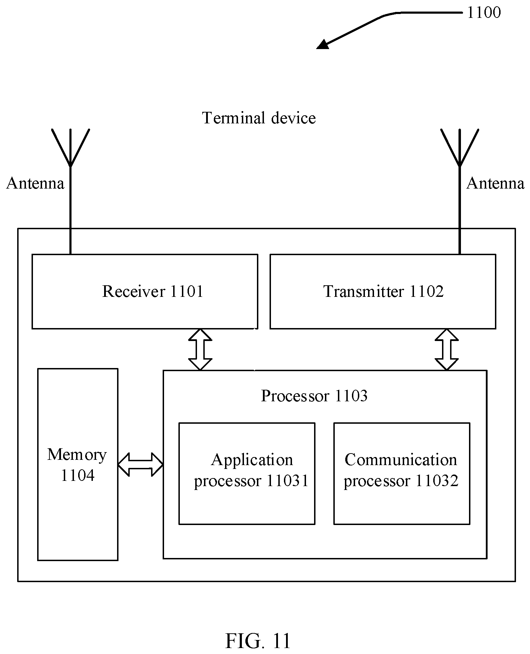

The following describes a terminal device according to an embodiment of this application. FIG. 11 is a diagram of a structure of the terminal device according to an embodiment of this application. The terminal device 1100 may be specifically a virtual reality VR device, a mobile phone, a tablet, a notebook computer, an intelligent wearable device, or the like. This is not limited herein. Specifically, the terminal device 1100 includes a receiver 1101, a transmitter 1102, a processor 1103, and a memory 1104 (where there may be one or more processors 1103 in the terminal device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data for the processor 1103. A part of the memory 1104 may further include a non-volatile random access memory (non-volatile random access memory, NVRAM). The memory 1104 stores a processor and operation instructions, an executable module, a data structure, a subset thereof, or an extension set thereof. The operation instructions may include various operation instructions for implementing various operations.

The processor 1103 controls an operation of an execution device. During specific application, components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 1103, or may be implemented by the processor 1103. The processor 1103 may be an integrated circuit chip and has a signal processing capability. In an implementation process, steps in the foregoing method may be completed by using a hardware integrated logic circuit in the processor 1103 or by using instructions in a form of software. The processor 1103 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logic block diagrams disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1104, and the processor 1103 reads information in the memory 1104 and completes steps related to the model training or model inference process in the method in combination with hardware of the processor.

The receiver 1101 may be configured to: receive input digit or character information, and generate a signal input related to a related setting and function control of the execution device. The transmitter 1102 may be configured to output the digit or character information through a first interface. The transmitter 1102 may be further configured to send an instruction to a disk group through the first interface, to modify data in the disk group. The transmitter 1102 may further include a display device such as a display.

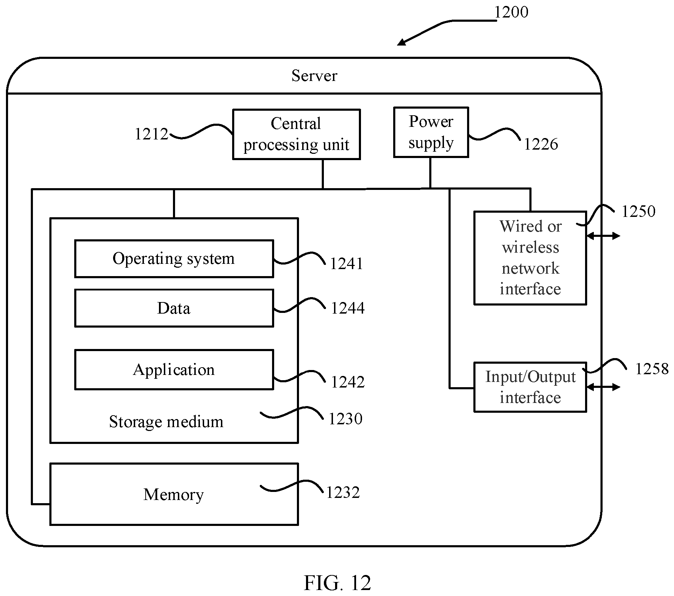

An embodiment of this application further provides a server. FIG. 12 is a diagram of a structure of the server according to an embodiment of this application. The server 1200 may vary greatly due to different configurations or performance, and may include one or more central processing units (central processing units, CPU) 1212 (for example, one or more processors) and a memory 1232, and one or more storage media 1230 (for example, one or more mass storage devices) that stores an application 1242 or data 1244. The memory 1232 and the storage medium 1230 may perform transitory storage or persistent storage. A program stored in the storage medium 1230 may include one or more modules (not shown in the figure), and each module may include a series of instruction operations for the server. Still further, the central processing unit 1212 may be configured to: communicate with the storage medium 1230, and perform, on the server 1200, the series of instruction operations in the storage medium 1230.

The server 1200 may further include one or more power supplies 1226, one or more wired or wireless network interfaces 1250, one or more input/output interfaces 1258, or one or more operating systems 1241, for example, Windows Server^{™}, Mac OS X^{™}, Unix^{™}, Linux^{™}, and FreeBSD^{™}.

In this embodiment of this application, the central processing unit 1212 is configured to perform an action related to model training or model inference in the foregoing embodiment.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used for signal processing. When the program is run on a computer, the computer is enabled to perform steps performed by the foregoing execution device, or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in the foregoing embodiment, or a chip in a training device performs the data processing method described in the foregoing embodiment. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

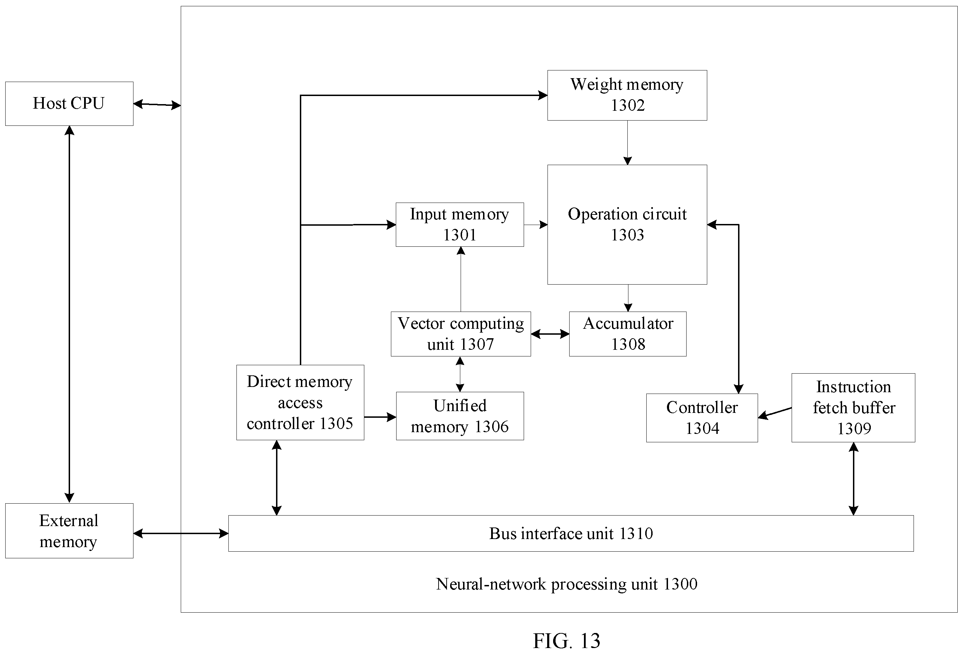

Specifically, FIG. 13 is a diagram of a structure of a chip according to an embodiment of this application. The chip may be represented as a neural-network processing unit NPU 1300. The NPU 1300 is mounted to a host CPU (Host CPU) as a coprocessor, and the host CPU allocates a task to the NPU. A core part of the NPU is an operation circuit 1303. A controller 1304 controls the operation circuit 1303 to extract matrix data in a memory and perform a multiplication operation.

In some implementations, the operation circuit 1303 includes a plurality of processing units (Process Engines, PEs). In some implementations, the operation circuit 1303 is a two-dimensional systolic array. The operation circuit 1303 may alternatively be a one-dimensional systolic array or another electronic circuit that can perform mathematical operations such as multiplication and addition. In some implementations, the operation circuit 1303 is a general-purpose matrix processor.

For example, it is assumed that there are an input matrix A, a weight matrix B, and an output matrix C. The operation circuit fetches, from a weight memory 1302, data corresponding to the matrix B, and caches the data on each PE in the operation circuit. The operation circuit fetches data of the matrix A from an input memory 1301, to perform a matrix operation on the matrix B, and stores an obtained partial result or an obtained final result of the matrix in an accumulator (accumulator) 1308.

A unified memory 1306 is configured to store input data and output data. Weight data is directly transferred to the weight memory 1302 through a direct memory access controller (Direct Memory Access Controller, DMAC) DMAC 1305. The input data is also transferred to the unified memory 1306 through the DMAC.

A BIU is a bus interface unit, namely, a bus interface unit 1310, and is configured to perform interaction between an AXI bus and the DMAC and between the AXI bus and an instruction fetch buffer (Instruction Fetch Buffer, IFB) 1309.

The bus interface unit (Bus Interface Unit, BIU for short) 1310 is used by the instruction fetch buffer 1309 to obtain an instruction from an external memory, and is further used by the direct memory access controller 1305 to obtain original data of the input matrix A or the weight matrix B from the external memory.

The DMAC is mainly configured to transfer input data in the external memory DDR to the unified memory 1306, transfer weight data to the weight memory 1302, or transfer input data to the input memory 1301.

A vector computing unit 1307 includes a plurality of operation processing units; and if necessary, performs further processing such as vector multiplication, vector addition, an exponential operation, a logarithmic operation, or value comparison on an output of the operation circuit 1303. The vector computing unit 1307 is mainly configured to perform network calculation, such as batch normalization (batch normalization), pixel-level summation, and upsampling on a feature plane, at a non-convolutional/fully connected layer in a neural network.

In some implementations, the vector computing unit 1307 can store a processed output vector in the unified memory 1306. For example, the vector computing unit 1307 may apply a linear function or a non-linear function to the output of the operation circuit 1303, for example, perform linear interpolation on a feature plane extracted at a convolutional layer. For another example, the vector computing unit 1307 may apply a linear function or a non-linear function to a vector of an accumulated value, to generate an activation value. In some implementations, the vector computing unit 1307 generates a normalized value, a value obtained through pixel-level summation, or both a normalized value and a value obtained through pixel-level summation. In some implementations, the processed output vector can be used as an activation input to the operation circuit 1303, for example, to be used at a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the apparatus embodiments described above are merely examples. The units described as separate parts may or may not be physically separate, and parts displayed as units may or may not be physical units, may be located in one place, or may be distributed on a plurality of network units. Some or all of the modules may be selected based on an actual requirement, to achieve objectives of the solutions in embodiments. In addition, in the accompanying drawings of the apparatus embodiments provided in this application, connection relationships between modules indicate that there are communication connections between the modules, and may be specifically implemented as one or more communication buses or signal cables.

Based on the description of the foregoing implementations, a person skilled in the art may clearly understand that this application may be implemented by software in addition to necessary universal hardware, or certainly may be implemented by dedicate hardware, including an application-specific integrated circuit, a dedicated CPU, a dedicated memory, a dedicated component, and the like. Usually, any functions that are performed by a computer program can be easily implemented by using corresponding hardware. Moreover, there may be various specific hardware structures, such as analog circuits, digital circuits, or dedicated circuits, used to achieve a same function. However, in this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. An image processing method, wherein the method comprises:
obtaining a first image;
generating target information based on the first image, wherein the target information comprises a first text and/or a second image, the first text indicates an optimization direction for image quality of the first image, image quality of the second image is higher than the image quality of the first image, and semantics of the second image corresponds to semantics of the first image; and
obtaining a third image based on the first image and the target information by using a first generative model, wherein image quality of the third image is higher than the image quality of the first image, and content of the third image is consistent with content of the first image.

2. The method according to claim 1, wherein the first generative model is configured to execute an image enhancement task.

3. The method according to claim 1 or 2, wherein generating the target information based on the first image comprises:
generating the target information based on the first image by using a machine learning model.

4. The method according to any one of claims 1 to 3, wherein the image quality is at least one of the following definition: PSNR, SSIM, LPIPS, DISTIS, NIQE, MANIQA, MUSIQ, and CLIPIQA.

5. The method according to any one of claims 1 to 4, wherein the target information further indicates a texture feature or a semantic feature of the first image.

6. The method according to claim 5, wherein the target information further comprises at least one of the following:
an encoding of the texture feature of the first image, an encoding of the semantic feature, an encoding combining the texture feature and the semantic feature, a natural language description of the texture feature of the first image, a natural language description of the semantic feature, or a natural language description combining the texture feature and the semantic feature.

7. The method according to claim 5 or 6, wherein generating the target information based on the first image comprises:
obtaining the encoding of the texture feature of the first image based on the first image by using an image encoder;
obtaining the encoding of the semantic feature of the first image based on a text description of the first image by using a text encoder; or
obtaining, based on the encoding of the texture feature and the encoding of the semantic feature by using a modality adaptation module, the encoding combining the texture feature and the semantic feature.

8. The method according to any one of claims 5 to 7, wherein generating the target information based on the first image comprises:
obtaining, based on the encoding or the natural language description of the texture feature of the first image, or the encoding or the natural language description of the semantic feature of the first image by using a second generative model, the image having the texture feature or the semantic feature of the first image; or
selecting, from a plurality of images based on the encoding or the natural language description of the texture feature of the first image, or the encoding or the natural language description of the semantic feature of the first image, an image having the texture feature or the semantic feature of the first image.

9. The method according to any one of claims 1 to 8, wherein the first generative model is a diffusion model, and obtaining the second image based on the first image and the target information by using the first generative model comprises:
obtaining, by using the diffusion model, the second image by using the target information and the first image as a condition input of a noise-adding module of the diffusion model.

10. A data processing apparatus, wherein the apparatus comprises:
an obtaining module, configured to obtain a first image; and
a processing module, configured to: generate target information based on the first image, wherein the target information comprises a first text and/or a second image, the first text indicates an optimization direction for image quality of the first image, image quality of the second image is higher than the image quality of the first image, and semantics of the second image corresponds to semantics of the first image; and obtain a third image based on the first image and the target information by using a first generative model, wherein image quality of the third image is higher than the image quality of the first image, and content of the third image is consistent with content of the first image.

11. The apparatus according to claim 10, wherein the first generative model is configured to execute an image enhancement task.

12. The apparatus according to claim 10 or 11, wherein the processing module is specifically configured to:
obtain the target information based on the first image by using a machine learning model.

13. The apparatus according to any one of claims 10 to 12, wherein the image quality is at least one of the following definition: PSNR, SSIM, LPIPS, DISTIS, NIQE, MANIQA, MUSIQ, and CLIPIQA.

14. The apparatus according to any one of claims 10 to 13, wherein the target information further indicates a texture feature or a semantic feature of the first image.

15. The apparatus according to claim 14, wherein the target information further comprises at least one of the following:
an encoding of the texture feature of the first image, an encoding of the semantic feature, an encoding combining the texture feature and the semantic feature, a natural language description of the texture feature of the first image, a natural language description of the semantic feature, or a natural language description combining the texture feature and the semantic feature.

16. The apparatus according to claim 14 or 15, wherein the processing module is specifically configured to:
obtain the encoding of the texture feature of the first image based on the first image by using an image encoder;
obtain the encoding of the semantic feature of the first image based on a text description of the first image by using a text encoder; or
obtain, based on the encoding of the texture feature and the encoding of the semantic feature by using a modality adaptation module, the encoding combining the texture feature and the semantic feature.

17. The apparatus according to any one of claims 14 to 16, wherein the processing module is specifically configured to:
obtain, based on the encoding or the natural language description of the texture feature of the first image, or the encoding or the natural language description of the semantic feature of the first image by using a second generative model, the image having the texture feature or the semantic feature of the first image; or
select, from a plurality of images based on the encoding or the natural language description of the texture feature of the first image, or the encoding or the natural language description of the semantic feature of the first image, an image having the texture feature or the semantic feature of the first image.

18. The apparatus according to any one of claims 10 to 17, wherein the first generative model is a diffusion model, and the processing module is specifically configured to:
obtain, by using the diffusion model, the second image by using the target information and the first image as a condition input of a noise-adding module of the diffusion model.

19. A computer storage medium, wherein the computer storage medium stores one or more instructions, and when the instructions are executed by one or more computers, the one or more computers are enabled to perform the operations of the method according to any one of claims 1 to 9.

20. A computer program product, comprising computer-readable instructions, wherein when the computer-readable instructions are run on a computer device, the computer device is enabled to perform the method according to any one of claims 1 to 9.

21. A system, comprising at least one processor and at least one memory, wherein the processor and the memory are connected and communicate with each other through a communication bus;
the at least one memory is configured to store code; and
the at least one processor is configured to execute the code to perform the method according to any one of claims 1 to 9.

22. A chip, comprising a processor, wherein the processor is configured to support a data processing apparatus in implementing the method according to any one of claims 1 to 9.
